# EUROPEAN PATENT SPECIFICATION

(11) **EP 4 116 745 B1**
(45) Date of publication and mention of the grant of the patent: **27.03.2024**
(21) Application number: 21184678.7
(22) Date of filing: 09.07.2021
(51) Int. Cl.: G01V 8/20

(54) **LIGHT CURTAIN DEVICE**
LICHTVORHANGVORRICHTUNG
DISPOSITIF GÉNÉRANT UN RIDEAU DE LUMIÈRE

(43) Date of publication of application: 11.01.2023
(73) Proprietor: Pepperl+Fuchs SE, 68307 Mannheim (DE)
(72) Inventor: NEO, Stephanie, 12277 Berlin (DE); WAI, Lee Yoke, 12277 Berlin (DE); PESCH, Sebastian, 12277 Berlin (DE); YUAN, Tan Jing, 12277 Berlin (DE)
(74) Representative: Fischer, Uwe

(56) References cited:
- EP-A1- 2 511 737
- EP-A1- 2 730 952
- EP-A2- 2 527 879
- US-A1- 2016 216 402

## Description

### Background of the invention

A light curtain device comprising one or more light emitting elements for generating a light curtain is described in Chinese Patent Application CN 203877712 U and the European Patent Application EP 2 730 952 A1.

A light curtain device according to the preamble of claim 1 is disclosed in the publication US 2016/0216402 A1.

### Objective of the present invention

An objective of the present invention is to propose a light curtain device that can be easily manufactured.

A further objective of the present invention is to propose a light curtain device that can be easily connected with compatible light curtain devices.

A further objective of the present invention is to provide a method for fabricating light curtain devices.

### Brief summary of the invention

An embodiment of the present invention relates to a light curtain device according to claim 1

The housing is preferably a profile. An extruded profile can be manufactured at moderate cost.

The squeezing element or at least one of the squeezing elements is preferably a screw that is screwed in a thread of the housing. The screw preferably presses the terminal cap towards the housing, thereby sandwiching the internal gasket between the terminal cap and the housing.

The terminal cap may be a plastic element in which inner sections of the electrical contact elements are embedded and sealed in an airtight manner.

Each of the internal ends of the electrical contact elements may be hardwired with an assigned contact pad of a printed circuit board located within the housing.

At least one of the electrical contact elements of the terminal cap may be a male-type contact configured to engage with a female-type electrical contact of another terminal cap of another light curtain device.

At least one of the electrical contact elements of the terminal cap may be a female-type contact configured to engage with a male-type electrical contact of another terminal cap of another light curtain device.

At least one of the electrical contact elements of the terminal cap may be a universal-type contact configured to engage with a universal-type contact of another terminal cap of another light curtain device.

In addition to said terminal cap, hereinafter referred to as first terminal cap, and said internal gasket, hereinafter referred to as first internal gasket, the light curtain device may comprise a second terminal cap and a second internal gasket.

The second terminal cap and the second internal gasket are preferably mounted at the second opening of the housing.

The second internal gasket is preferably mounted between the second terminal cap and the housing. The second internal gasket preferably seals the interface between the second terminal cap and the housing in an airtight manner to prevent fluids from entering the interior of the housing.

The second terminal cap preferably comprises electrical contact elements that each have an internal end, which is connected to one or more electrical components located inside the housing, and an external end, which allows connecting the electrical contact element to a corresponding electrical contact element of a another light curtain device.

The electrical contact elements preferably extend along the second terminal cap and pass the second internal gasket.

At least one squeezing element preferably provides a squeezing force between the second terminal cap and the housing.

The electrical contact elements of the first terminal cap and the electrical contact elements of the second terminal cap are preferably pairwise connectable such that the first terminal cap of the light curtain device may be connected with the second terminal cap of another identical light curtain device.

Another embodiment of the present invention relates to an arrangement of a first light curtain device that is preferably configured as described above, and a second light curtain device, that is preferably configured as described above.

The first light curtain device and the second light curtain device are preferably aligned and their opposing terminal caps and their corresponding electrical contact elements are preferably connected to each other.

An intermediate gasket is preferably located between the terminal caps.

The intermediate gasket surrounds and seals the external ends of the connected electrical contact elements in an airtight manner to prevent fluids from reaching the external ends of the electrical contact elements.

The first terminal cap of the first light curtain device preferably provides at least one locking hook for engaging with a locking recess of the second light curtain device in order to provide a form-fit connection between the light curtain devices.

The form-fit connection preferably provides a squeezing force that presses the terminal caps and the intermediate gasket together and seals the interface between the light curtain devices.

Another embodiment of the present invention relates to a method of fabricating a light curtain device that comprises one or more light emitting elements for generating a light curtain. The method is characterized by the steps of
- arranging the one or more light emitting elements inside a housing that comprises a first and a second opening at opposing end sections of the housing,
- connecting internal ends of electrical contact elements of a terminal cap to one or more electrical components located inside the housing,
- mounting the terminal cap at one of the openings of the housing and a gasket therebetween, and
- providing a squeezing force between the terminal cap and the housing and sealing the interface between the terminal cap and the housing.

Another embodiment of the present invention relates to method of fabricating an arrangement of a first light curtain device and a second light curtain device. The method includes aligning the light curtain devices and connecting their opposing terminal caps. The light curtain devices are preferably configured and/or manufactured as described above.

### Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, which is defined by the appended claims, the invention will be described and explained with additional specificity and detail by the use of the accompanying drawings in which
- Figures 1-2: illustrate an arrangement of two exemplary embodiments of light curtain devices according to the present invention,
- Figures 3-6: illustrate a first terminal cap of the exemplary light curtain devices of Figures 1 and 2 in further detail, and
- Figures 7-10: illustrate a second terminal cap of the exemplary light curtain devices of Figures 1 and 2 in further detail.

### Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention. The scope of the invention is defined by the appended claims.

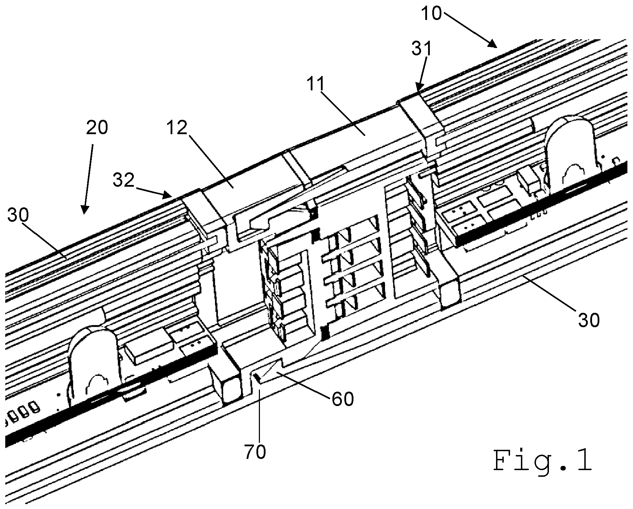

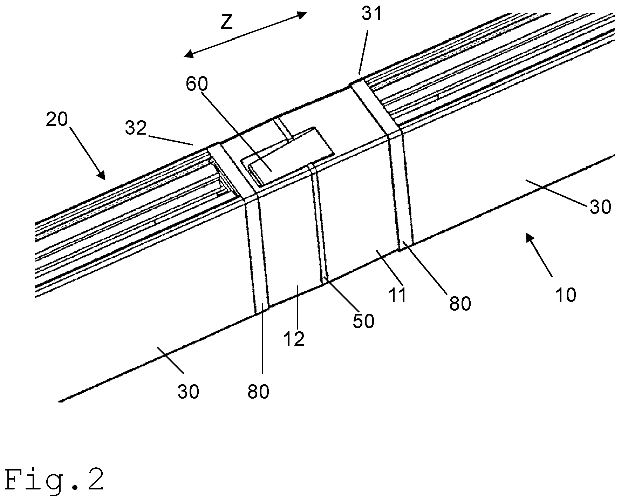

Figures 1 and 2 show an exemplary embodiment of an arrangement according to the present invention. The arrangement comprises a first light curtain device 10 and a second light curtain device 20. The light curtain devices 10 and 20 may be identical.

Both light curtain devices 10 and 20 comprise one or more light emitting elements for generating a light curtain. The light emitting elements are accommodated by a housing 30. The housing 30 is preferably a profile made of Aluminum or plastic. The profile may be an extruded profile.

Each housing 30 has a first opening 31 and a second opening 32 at opposing end sections of the housing 30. Each first opening 31 is sealed by a first terminal cap 11, and each second opening 32 is sealed by a second terminal cap 12.

The first terminal cap 11 of the first light curtain device 10 may be identical with the first terminal cap 11 (not depicted) of the second light curtain device 20, and the second terminal cap 12 (not depicted) of the first light curtain device 10 may be identical with the second terminal cap 12 of the second light curtain device 20.

The first light curtain device 10 and the second light curtain device 20 are aligned along the longitudinal axis Z of the housings 30, and the opposing terminal caps 11 and 12 are connected with each other. Both terminal caps 11 and 12 are provided with electrical contact elements that are each connected with an opposing electrical contact element of the opposing other terminal cap.

An intermediate gasket 50 is located between the terminal caps 11 and 12. The intermediate gasket 50 surrounds and seals the external ends of the connected electrical contact elements 40 in an airtight manner to prevent fluids from reaching the electrical contact elements 40 and causing short circuits.

The first terminal cap 11 of the first light curtain device 10 comprises at least one locking hook 60 for engaging with a locking recess 70 in the second terminal cap 12 of the second light curtain device 20 in order to provide a form-fit connection between the terminal caps 11 and 12. The form-fit connection provides a squeezing force that presses the terminal caps 11 and 12 together, squeezes the intermediate gasket 50 and thereby seals the interface between the terminal caps 11 and 12 of the light curtain devices 10 and 20.

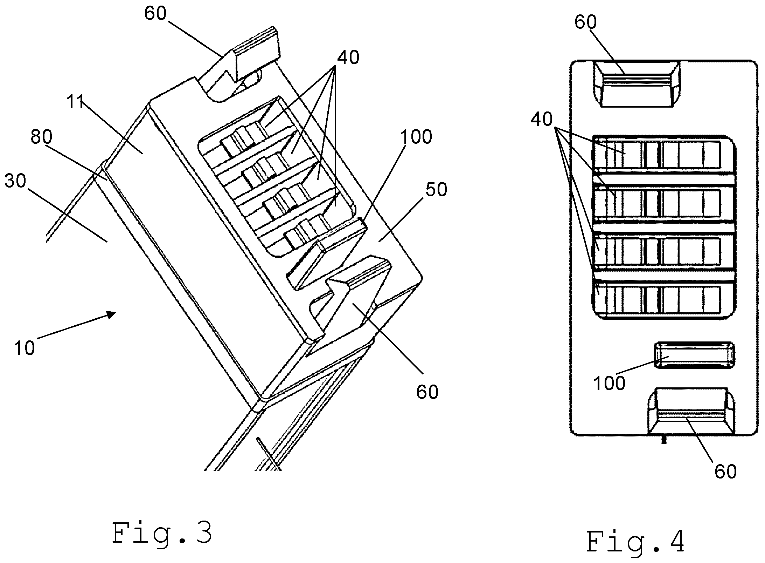

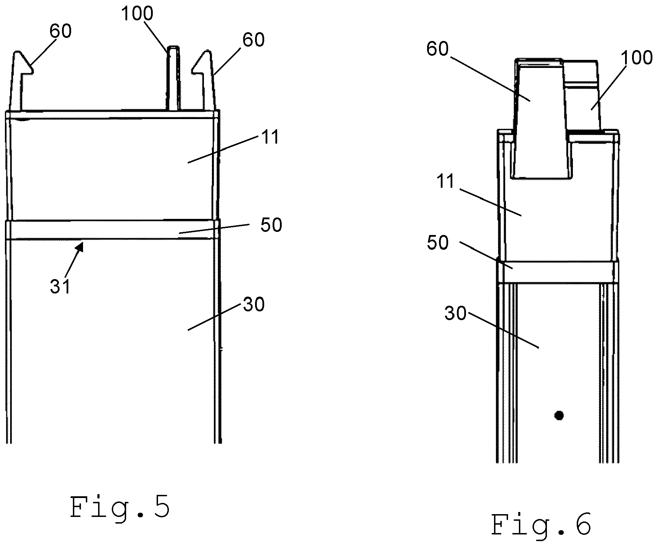

Figures 3-6 depict the first terminal cap 11 of the first light curtain device 10 and the respective end section of the housing 30 in further detail. It can be seen that an internal gasket 80 is mounted between the first terminal cap 11 and the housing 30. The internal gasket 80 seals the interface between the first terminal cap 11 and the housing 30 in an airtight manner to prevent fluids from entering the interior of the housing 30 and causing short circuits.

The first terminal cap 11 comprises a plurality of electrical contact elements 40 that each have an internal end (not depicted) and an external end. The internal ends are connected to one or more electrical components located inside the housing 30 of the first light curtain device 10. For instance, each of the internal ends of the electrical contact elements 40 may be hardwired with an assigned contact pad of a printed circuit board located within the housing 30 of the first light curtain device 10.

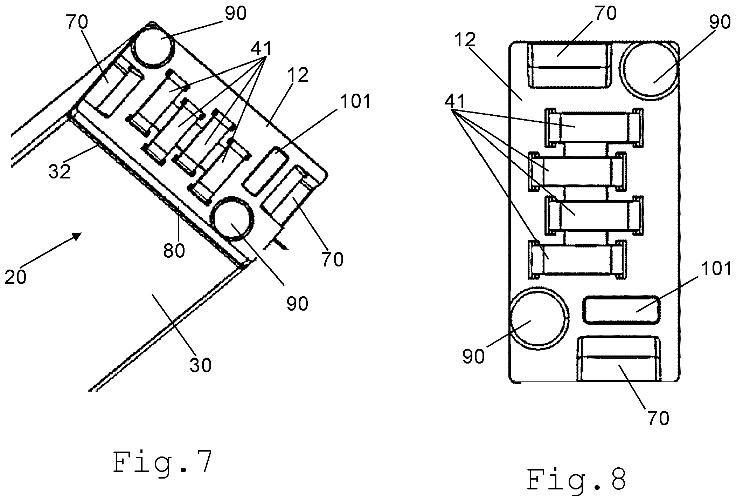

The external ends allow connecting the electrical contact elements 40 to corresponding electrical contact elements of another light curtain device, for instance the contact elements 41 of the second terminal cap 12 depicted in Figures 7-10.

In Figures 3-6, the contact elements 40 of the first terminal cap 11 are female-type contacts that extend along the terminal cap, but do not pass the intermediate gasket 50 of Figures 1 and 2.

The first terminal cap 11 may be a plastic element in which inner sections of the electrical contact elements 40 are embedded and sealed in an airtight manner.

The first terminal cap 11 is preferably attached to the housing 30 via one or more screws (not depicted). Threaded holes for the screws are not seen in Figures 3-6 because they are hidden by the intermediate gasket 50 which covers the threaded holes. The intermediate gasket 50 may be glued to the first terminal cap 11.

The threaded holes are preferably cut into the end face of the housing. The threaded holes and the screws preferably extend along the longitudinal direction Z of the housing 30. The screws may press the first terminal cap 11 towards the housing 30, thereby sandwiching the internal gasket 80 between the first terminal cap 11 and the housing 30. In other words, the screws may form squeezing elements that squeeze the internal gasket 80 between the first terminal cap 11 and the housing 30.

The first terminal cap 11 further comprises two locking hooks 60 for engaging with two locking recesses 70 (see Figures 7-10) of the second terminal cap 12 of the second light curtain device 20. The looking hooks 60 and the recesses 70 provide a form-fit connection between the terminal caps 11 and 12.

The form-fit connection is configured to generate a mechanical force that presses the terminal caps 11 and 12 of the light curtain devices 10 and 20 together, thereby squeezing the intermediate gasket 50 therebetween and thereby sealing the interface between the terminal caps 11 and 12. One or more guiding pins 100 may exist for inserting in assigned pin holes 101 of the other terminal. The pins 100 may avoid or at least reduce tilting between the terminal caps 11 and 12 with respect to the longitudinal axis Z of the housings 30.

Figures 7-10 depict the second terminal cap 12 in further detail. It can be seen that an internal gasket 80 is mounted between the second terminal cap 12 and the housing 30. The internal gasket 80 seals the interface between the second terminal cap 12 and the housing 30 in an airtight manner to prevent fluids from entering the interior of the housing 30 and causing short circuits.

The second terminal cap 12 comprises a plurality of electrical contact elements 41 that each have an internal end (not depicted) and an external end. The internal ends are connected to one or more electrical components located inside the housing 30 of the second light curtain device 20. For instance, each of the internal ends of the electrical contact elements 41 may be hardwired with an assigned contact pad of a printed circuit board located within the housing 30 of the second light curtain device 20.

The external ends allow connecting the electrical contact elements 41 to corresponding electrical contact elements of another light curtain device, for instance the contact elements 40 of the first terminal cap 11. The second terminal cap 12 may be a plastic element in which inner sections of the electrical contact elements 41 are embedded and sealed in an airtight manner.

In Figures 7-10, the contact elements 41 of the second terminal cap 12 are male-type contacts that extend along the terminal cap and pass the intermediate gasket 50 of Figures 1 and 2.

The second terminal cap 12 is preferably connected with the housing 30 via one or more screws. The screws are preferably screwed into threaded holes 90 (see Figures 7 and 8) provided in the housing 30. The threaded holes 90 are preferably cut into the end face of the housing 30. The threaded holes 90 preferably extend along the longitudinal direction Z of the housing 30.

The screws may press the second terminal cap 12 towards the housing 30, thereby sandwiching the internal gasket 80 between the second terminal cap 12 and the housing 30. In other words, the screws may form squeezing elements that squeeze the internal gasket 80 between the second terminal cap 12 and the housing 30.

Figures 7-10 further depict two recesses 70 in the second terminal cap 12 for engaging with the locking hooks 60 (see Figures 3-6) of the first terminal cap 11 of the first curtain device 10. The looking recesses 70 and the locking hooks 60 allow the form-fit connection between the terminal caps 11 and 12 as discussed above.

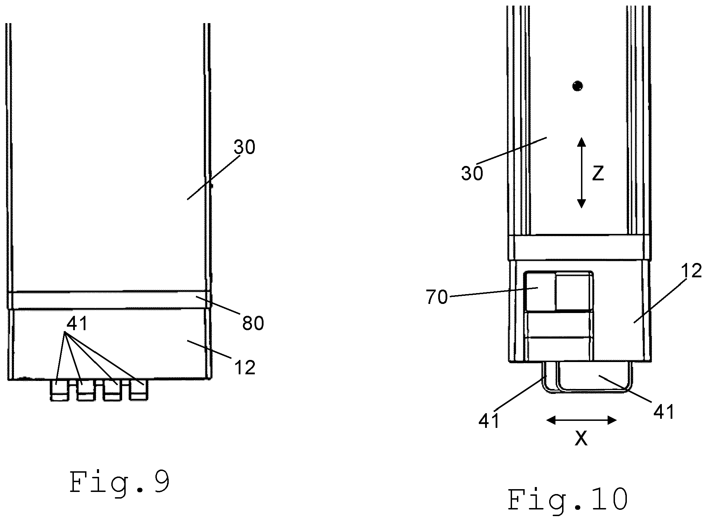

Figure 10 also shows that the contact elements 41 and the corresponding contact elements 40 of the first terminal pad 11 are preferably shifted relatively to one another in a direction X that is perpendicular to the longitudinal direction Z of the housing 30. Such a shift provides additional stability and avoids or at least reduces a tilting movement between the terminal caps 11 and 12.

It should be noted and understood that improvements and modifications of the embodiments described above may be made, within the scope of the appended claims.

### Reference Signs

- 10: First light curtain device
- 11: First terminal cap
- 12: Second terminal cap
- 20: Second light curtain device
- 30: Housing
- 31: First opening
- 32: Second opening
- 40: Contact element
- 41: Contact element
- 50: Intermediate gasket
- 60: Locking hood
- 70: Locking recess
- 80: Internal gasket
- 90: Hole
- 100: Pins
- 101: Pin holes

- X: Direction
- Z: Longitudinal axis

## Claims

1. Light curtain device (10, 20) comprising one or more light emitting elements for generating a light curtain, wherein
- the light curtain device (10, 20) comprises a housing (30) for accommodating the one or more light emitting elements and a first and a second opening (31, 32) at opposing end sections of the housing (30),
- wherein a terminal cap (11, 12) and an internal gasket (80) are mounted at at least one of the openings (31, 32) of the housing (30), the internal gasket (80) being mounted between the terminal cap (11, 12) and the housing (30) and sealing the interface between the terminal cap (11, 12) and the housing (30) in an airtight manner to prevent fluids from entering the interior of the housing (30) at the interface between the terminal cap (11, 12) and the housing (30),
- wherein the terminal cap (11, 12) comprises electrical contact elements (40, 41) that each have an internal end that is connected to one or more electrical components located inside the housing (30), and an external end which allows connecting the electrical contact element (40, 41) to a corresponding electrical contact element (40, 41) of a another light curtain device (10, 20),
- wherein the electrical contact elements (40, 41) extend along the terminal cap (11, 12) and pass the internal gasket (80), and
- wherein at least one squeezing element provides a squeezing force onto the internal gasket (80),
**characterized in that**
- the terminal cap (11, 12) provides at least one locking hook (60) for engaging with a locking recess (70) of the other light curtain device (10, 20), and/or at least one locking recess (70) for engaging with a locking hook (60) of the other light curtain device (10, 20) in order to provide a form-fit connection with the other light curtain device (10, 20), wherein the form-fit connection is configured to provide a mechanical force that presses the terminal caps (11, 12) of the light curtain devices (10, 20) together,
- wherein the outer surface of the terminal cap (11, 12) is configured to be provided with an intermediate gasket (50) that is pressed in response to the form-fit connection and seals the interface between the terminal caps (11, 12) of the light curtain devices (10, 20),
- wherein the intermediate gasket surrounds and seals the external ends of the connected electrical contact elements in an airtight manner to prevent fluids from reaching the external ends of the electrical contact elements.

2. Light curtain device (10, 20) of claim 1,
wherein the housing (30) is a profile, preferably an extruded profile.

3. Light curtain device (10, 20) of any of the preceding claims,
wherein the squeezing element or at least one of the squeezing elements is a screw that is screwed in a threaded hole (90) of the housing (30) and presses the terminal cap (11, 12) towards the housing (30), thereby sandwiching the internal gasket (80) between the terminal cap (11, 12) and the housing (30).

4. Light curtain device (10, 20) of any of the preceding claims,
wherein the terminal cap (11, 12) is a plastic element in which inner sections of the electrical contact elements (40, 41) are embedded and sealed in an airtight manner.

5. Light curtain device (10, 20) of any of the preceding claims,
wherein each of the internal ends of the electrical contact elements (40, 41) is hardwired with an assigned contact pad of a printed circuit board located within the housing (30).

6. Light curtain device (10, 20) of any of the preceding claims,
- wherein at least one of the electrical contact elements (41) of the terminal cap (11, 12) is a male-type contact configured to engage with a female-type electrical contact of another terminal cap (11, 12) of another light curtain device (10, 20) and/or
- wherein at least one of the electrical contact elements (40) of the terminal cap (11, 12) is a female-type contact configured to engage with a male-type electrical contact of another terminal cap (11, 12) of another light curtain device (10, 20) and/or
- wherein at least one of the electrical contact elements of the terminal cap (11, 12) is a universal-type contact configured to engage with a universal-type contact of another terminal cap (11, 12) of another light curtain device (10, 20).

7. Light curtain device (10, 20) of any of the preceding claims,
- wherein said terminal cap (11) and said internal gasket (80) are mounted at the first opening (31) of the housing (30),
- wherein in addition to said terminal cap (11), hereinafter referred to as first terminal cap (11), and said internal gasket (80), hereinafter referred to as first internal gasket (80), the light curtain device (10, 20) comprises a second terminal cap (12) and a second internal gasket (80),
- wherein the second terminal cap (12) and the second internal gasket (80) are mounted at the second opening (32) of the housing (30), the second internal gasket (80) being mounted between the second terminal cap (12) and the housing (30) and sealing the interface between the second terminal cap (12) and the housing (30) in an airtight manner to prevent fluids from entering the interior of the housing (30) at the interface between the second terminal cap (12) and the housing (30),
- wherein the second terminal cap (12) comprises electrical contact elements (40, 41) that each have an internal end, which is connected to one or more electrical components located inside the housing (30), and an external end, which allows connecting the electrical contact element (40, 41) to a corresponding electrical contact element (40, 41) of a another light curtain device (10, 20),
- wherein the electrical contact elements (40, 41) extend along the second terminal cap (12) and pass the second internal gasket, and
- wherein at least one squeezing element provides a squeezing force between the second terminal cap (12) and the housing (30).

8. Light curtain device (10, 20) of claim 7,
wherein the electrical contact elements (40, 41) of the first terminal cap (11) and the electrical contact elements (40, 41) of the second terminal cap (12) are pairwise connectable such that the first terminal cap (11) of the light curtain device (10, 20) may be connected with the second terminal cap (12) of another identical light curtain device (10, 20).

9. Arrangement of a first light curtain device (10) according to any of the preceding claims and a second light curtain device (20) according to any of the preceding claims
- wherein the first light curtain device (10) and the second light curtain device (20) are aligned and their opposing terminal caps (11, 12) and their corresponding electrical contact elements (40, 41) are connected to each other,
- wherein the intermediate gasket (50) is located between the terminal caps (11, 12), and
- wherein the intermediate gasket (50) surrounds and seals the external ends of the connected electrical contact elements (40, 41) in an airtight manner to prevent fluids from reaching the external ends of the electrical contact elements (40, 41).

10. Arrangement of claim 9
- wherein a first terminal cap (11) of the first light curtain device (10) provides at least one locking hook (60) for engaging with a locking recess (70) of the second light curtain device (20) in order to provide a form-fit connection between the light curtain devices (10, 20), and
- wherein the form-fit connection provides a squeezing force that presses the terminal caps (11, 12) and the intermediate gasket (50) together and seals the interface between the terminal caps (11, 12) of the light curtain devices (10, 20).

11. Method of fabricating a light curtain device (10, 20) according to any of the preceding claims for generating a light curtain,
**characterized by** the steps of
- arranging the one or more light emitting elements inside a housing (30) that comprises a first and a second opening (31, 32) at opposing end sections of the housing (30),
- connecting internal ends of electrical contact elements (40, 41) of a terminal cap (11, 12) to one or more electrical components located inside the housing (30),
- mounting the terminal cap (11, 12) at one of the openings (31, 32) of the housing (30) and a gasket therebetween, and
- providing a squeezing force between the terminal cap (11, 12) and the housing (30) and sealing the interface between the terminal cap (11, 12) and the housing (30).

## Patentansprüche

1. Lichtvorhangvorrichtung (10, 20), umfassend ein oder mehrere lichtemittierende Elemente zum Erzeugen eines Lichtvorhangs, wobei
- die Lichtvorhangvorrichtung (10, 20) ein Gehäuse (30) zum Aufnehmen des einen oder der mehreren lichtemittierenden Elemente und eine erste und eine zweite Öffnung (31, 32) an gegenüberliegenden Endabschnitten des Gehäuses (30) umfasst,
- wobei eine Abschlusskappe (11, 12) und eine Innendichtung (80) an mindestens einer der Öffnungen (31, 32) des Gehäuses (30) angebracht sind, wobei die Innendichtung (80) zwischen der Abschlusskappe (11, 12) und dem Gehäuse (30) angebracht ist und die Schnittstelle zwischen der Abschlusskappe (11, 12) und dem Gehäuse (30) luftdicht abdichtet, um zu verhindern, dass Flüssigkeiten an der Schnittstelle zwischen der Abschlusskappe (11, 12) und dem Gehäuse (30) in das Innere des Gehäuses (30) gelangen,
- wobei die Abschlusskappe (11, 12) elektrische Kontaktelemente (40, 41) umfasst, die jeweils ein inneres Ende, das mit einer oder mehreren elektrischen Komponenten verbunden ist, die sich innerhalb des Gehäuses (30) befinden, und ein äußeres Ende aufweisen, das es ermöglicht, das elektrische Kontaktelement (40, 41) mit einem entsprechenden elektrischen Kontaktelement (40, 41) einer anderen Lichtvorhangvorrichtung (10, 20) zu verbinden,
- wobei sich die elektrischen Kontaktelemente (40, 41) entlang der Abschlusskappe (11, 12) erstrecken und die Innendichtung (80) durchdringen, und
- wobei mindestens ein Quetschelement eine Quetschkraft auf die Innendichtung (80) bereitstellt,
**dadurch gekennzeichnet, dass**
- die Abschlusskappe (11, 12) mindestens einen Verriegelungshaken (60) zum Eingreifen in eine Verriegelungsaussparung (70) der anderen Lichtvorhangvorrichtung (10, 20) und/oder mindestens eine Verriegelungsaussparung (70) zum Eingreifen in einen Verriegelungshaken (60) der anderen Lichtvorhangvorrichtung (10, 20) vorsieht, um eine formschlüssige Verbindung mit der anderen Lichtvorhangvorrichtung (10, 20) bereitzustellen, wobei die formschlüssige Verbindung dazu ausgelegt ist, eine mechanische Kraft bereitzustellen, die die Abschlusskappen (11, 12) der Lichtvorhangvorrichtungen (10,) zusammenpresst,
- wobei die Außenfläche der Abschlusskappe (11, 12) dazu ausgelegt ist, mit einer Zwischendichtung (50) versehen zu werden, die als Reaktion auf die formschlüssige Verbindung gepresst wird und die Schnittstelle zwischen den Abschlusskappen (11, 12) der Lichtvorhangvorrichtungen (10, 20) abdichtet,
- wobei die Zwischendichtung die äußeren Enden der verbindbaren elektrischen Kontaktelemente luftdicht umgibt und abdichtet, um zu verhindern, dass Flüssigkeiten die äußeren Enden der elektrischen Kontaktelemente erreichen.

2. Lichtvorhangvorrichtung (10, 20) gemäß Anspruch 1,
- wobei das Gehäuse (30) ein Profil, vorzugsweise ein Strangpressprofil, ist.

3. Lichtvorhangvorrichtung (10, 20) gemäß einem der vorhergehenden Ansprüche,
wobei das Quetschelement oder mindestens eines der Quetschelemente eine Schraube ist, die in eine Gewindebohrung (90) des Gehäuses (30) geschraubt wird und die Abschlusskappe (11, 12) in Richtung des Gehäuses (30) drückt, wodurch die Innendichtung (80) zwischen der Abschlusskappe (11, 12) und dem Gehäuse (30) eingeklemmt wird.

4. Lichtvorhangvorrichtung (10, 20) gemäß einem der vorhergehenden Ansprüche,
wobei die Abschlusskappe (11, 12) ein Kunststoffelement ist, in das innere Abschnitte der elektrischen Kontaktelemente (40, 41) eingebettet und luftdicht abgedichtet sind.

5. Lichtvorhangvorrichtung (10, 20) gemäß einem der vorhergehenden Ansprüche,
wobei jedes der inneren Enden der elektrischen Kontaktelemente (40, 41) mit einem zugeordneten Kontaktfeld einer gedruckten Leiterplatte, die sich innerhalb des Gehäuses (30) befindet, fest verdrahtet ist.

6. Lichtvorhangvorrichtung (10, 20) gemäß einem der vorhergehenden Ansprüche,
- wobei mindestens eines der elektrischen Kontaktelemente (41) der Abschlusskappe (11, 12) ein Steckerkontakt ist, der dazu ausgelegt ist, mit einem elektrischen Buchsenkontakt einer anderen Abschlusskappe (11, 12) einer anderen Lichtvorhangvorrichtung (10, 20) in Eingriff zu kommen, und/oder
- wobei mindestens eines der elektrischen Kontaktelemente (40) der Abschlusskappe (11, 12) ein Buchsenkontakt ist, der dazu ausgelegt ist, mit einem elektrischen Steckerkontakt einer anderen Abschlusskappe (11, 12) einer anderen Lichtvorhangvorrichtung (10, 20) in Eingriff zu kommen, und/oder
- wobei mindestens eines der elektrischen Kontaktelemente der Abschlusskappe (11, 12) ein Universalkontakt ist, der dazu ausgelegt ist, mit einem Universalkontakt einer anderen Abschlusskappe (11, 12) einer anderen Lichtvorhangvorrichtung (10, 20) in Eingriff zu kommen.

7. Lichtvorhangvorrichtung (10, 20) gemäß einem der vorhergehenden Ansprüche,
- wobei die Abschlusskappe (11) und die Innendichtung (80) an der ersten Öffnung (31) des Gehäuses (30) angebracht sind,
- wobei die Lichtvorhangvorrichtung (10, 20) zusätzlich zur Abschlusskappe (11), im Folgenden als erste Abschlusskappe (11) bezeichnet, und der Innendichtung (80), im Folgenden als erste Innendichtung (80) bezeichnet, eine zweite Abschlusskappe (12) und eine zweite Innendichtung (80) umfasst,
- wobei die zweite Abschlusskappe (12) und die zweite Innendichtung (80) an der zweiten Öffnung (32) des Gehäuses (30) angebracht sind, wobei die zweite Innendichtung (80) zwischen der zweiten Abschlusskappe (12) und dem Gehäuse (30) angebracht ist und die Schnittstelle zwischen der zweiten Abschlusskappe (12) und dem Gehäuse (30) luftdicht abdichtet, um zu verhindern, dass Flüssigkeiten an der Schnittstelle zwischen der zweiten Abschlusskappe (12) und dem Gehäuse (30) in das Innere des Gehäuses (30) eindringen,
- wobei die zweite Abschlusskappe (12) elektrische Kontaktelemente (40, 41) umfasst, die jeweils ein inneres Ende, das mit einer oder mehreren elektrischen Komponenten verbunden ist, die sich innerhalb des Gehäuses (30) befinden, und ein äußeres Ende aufweisen, das es ermöglicht, das elektrische Kontaktelement (40, 41) mit einem entsprechenden elektrischen Kontaktelement (40, 41) einer anderen Lichtvorhangvorrichtung (10, 20) zu verbinden,
- wobei sich die elektrischen Kontaktelemente (40, 41) entlang der zweiten Abschlusskappe (12) erstrecken und die zweite Innendichtung durchdringen, und
- wobei mindestens ein Quetschelement eine Quetschkraft zwischen der zweiten Abschlusskappe (12) und dem Gehäuse (30) bereitstellt.

8. Lichtvorhangvorrichtung (10, 20) gemäß Anspruch 7, wobei die elektrischen Kontaktelemente (40, 41) der ersten Abschlusskappe (11) und die elektrischen Kontaktelemente (40, 41) der zweiten Abschlusskappe (12) paarweise so verbindbar sind, dass die erste Abschlusskappe (11) der Lichtvorhangvorrichtung (10, 20) mit der zweiten Abschlusskappe (12) einer anderen identischen Lichtvorhangvorrichtung (10, 20) verbunden werden kann.

9. Anordnung einer ersten Lichtvorhangvorrichtung (10) gemäß einem der vorhergehenden Ansprüche und einer zweiten Lichtvorhangvorrichtung (20) gemäß einem der vorhergehenden Ansprüche,
- wobei die erste Lichtvorhangvorrichtung (10) und die zweite Lichtvorhangvorrichtung (20) aufeinander ausgerichtet sind und ihre gegenüberliegenden Abschlusskappen (11, 12) und ihre entsprechenden elektrischen Kontaktelemente (40, 41) miteinander verbunden sind,
- wobei sich die Zwischendichtung (50) zwischen den Abschlusskappen (11, 12) befindet, und
- wobei die Zwischendichtung (50) die äußeren Enden der verbundenen elektrischen Kontaktelemente (40, 41) luftdicht umgibt und abdichtet, um zu verhindern, dass Flüssigkeiten die äußeren Enden der elektrischen Kontaktelemente (40, 41) erreichen.

10. Anordnung gemäß Anspruch 9,
- wobei eine erste Abschlusskappe (11) der ersten Lichtvorhangvorrichtung (10) mindestens einen Verriegelungshaken (60) zum Ineingriffbringen mit einer Verriegelungsaussparung (70) der zweiten Lichtvorhangvorrichtung (20) aufweist, um eine formschlüssige Verbindung zwischen den Lichtvorhangvorrichtungen (10, 20) bereitzustellen, und
- wobei die formschlüssige Verbindung eine Quetschkraft bereitstellt, die die Abschlusskappen (11, 12) und die Zwischendichtung (50) zusammenpresst und die Schnittstelle zwischen den Abschlusskappen (11, 12) der Lichtvorhangvorrichtungen (10, 20) abdichtet.

11. Verfahren zum Herstellen einer Lichtvorhangvorrichtung (10, 20) gemäß einem der vorhergehenden Ansprüche zum Erzeugen eines Lichtvorhangs,
**gekennzeichnet durch** die folgenden Schritte:
- Anordnen des einen oder der mehreren lichtemittierenden Elemente in einem Gehäuse (30), das eine erste und eine zweite Öffnung (31, 32) an gegenüberliegenden Endabschnitten des Gehäuses (30) umfasst,
- Verbinden der inneren Enden von elektrischen Kontaktelementen (40, 41) einer Abschlusskappe (11, 12) mit einer oder mehreren elektrischen Komponenten, die sich im Inneren des Gehäuses (30) befinden,
- Anbringen der Abschlusskappe (11, 12) an einer der Öffnungen (31, 32) des Gehäuses (30) und einer dazwischen liegenden Dichtung, und
- Bereitstellen einer Quetschkraft zwischen der Abschlusskappe (11, 12) und dem Gehäuse (30) und Abdichten der Schnittstelle zwischen der Abschlusskappe (11, 12) und dem Gehäuse (30).

## Revendications

1. Dispositif générant un rideau de lumière (10, 20) comprenant un ou plusieurs éléments électroluminescents pour générer un rideau de lumière,
- le dispositif générant un rideau de lumière (10, 20) comprenant un logement (30) destiné à recevoir les un ou plusieurs éléments électroluminescents et une première et une deuxième ouverture (31, 32) au niveau de sections d'extrémité opposées du logement (30),
- dans lequel un capuchon terminal (11, 12) et un joint interne (80) sont montés au niveau d'au moins une des ouvertures (31, 32) du logement (30), le joint interne (80) étant monté entre le capuchon terminal (11, 12) et le logement (30) et scellant l'interface entre le capuchon terminal (11, 12) et le logement (30) de manière étanche à l'air pour empêcher des fluides d'entrer à l'intérieur du logement (30) au niveau de l'interface entre le capuchon terminal (11, 12) et le logement (30),
- le capuchon terminal (11, 12) comprenant des éléments de contact électrique (40, 41) qui ont chacun une extrémité interne qui est connectée à un ou plusieurs composants électriques situés à l'intérieur du logement (30), et une extrémité externe qui permet de connecter l'élément de contact électrique (40, 41) à un élément de contact électrique correspondant (40, 41) d'un autre dispositif générant un rideau de lumière (10, 20),
- les éléments de contact électrique (40, 41) s'étendant le long du capuchon terminal (11, 12) et passant le joint interne (80), et
- dans lequel au moins un élément de compression fournit une force de compression sur le joint interne (80),
**caractérisé en ce que**
- le capuchon terminal (11, 12) fournit au moins un crochet de verrouillage (60) destiné à se mettre en prise avec un évidement de verrouillage (70) de l'autre dispositif générant un rideau de lumière (10, 20), et/ou au moins un évidement de verrouillage (70) destiné à se mettre en prise avec un crochet de verrouillage (60) de l'autre dispositif générant un rideau de lumière (10, 20) afin de fournir une connexion par complémentarité de forme avec l'autre dispositif générant un rideau de lumière (10, 20), la connexion par complémentarité de forme étant configurée pour fournir une force mécanique qui presse ensemble les capuchons terminaux (11, 12) des dispositifs générant un rideau de lumière (10, 20),
- dans lequel la surface externe du capuchon terminal (11, 12) est configurée pour être pourvue d'un joint intermédiaire (50) qui est pressé en réponse à la connexion par complémentarité de forme et scelle l'interface entre les capuchons terminaux (11, 12) des dispositifs générant un rideau de lumière (10, 20),
- le joint intermédiaire entourant et scellant les extrémités externes des éléments de contact électrique connectés de manière étanche à l'air pour empêcher des fluides d'atteindre les extrémités externes des éléments de contact électrique.

2. Dispositif générant un rideau de lumière (10, 20) selon la revendication 1,
dans lequel le logement (30) est un profilé, préférablement un profilé extrudé.

3. Dispositif générant un rideau de lumière (10, 20) selon l'une quelconque des revendications précédentes, dans lequel l'élément de compression ou au moins un des éléments de compression est une vis qui est vissée dans un trou fileté (90) du logement (30) et presse le capuchon terminal (11, 12) vers le logement (30), prenant ainsi en sandwich le joint interne (80) entre le capuchon terminal (11, 12) et le logement (30).

4. Dispositif générant un rideau de lumière (10, 20) selon l'une quelconque des revendications précédentes, dans lequel le capuchon terminal (11, 12) est un élément en plastique dans lequel des sections internes des éléments de contact électrique (40, 41) sont incorporées et scellées de manière étanche à l'air.

5. Dispositif générant un rideau de lumière (10, 20) selon l'une quelconque des revendications précédentes, dans lequel chacune des extrémités internes des éléments de contact électrique (40, 41) est câblée avec un plot de contact attribué d'une carte de circuit imprimé située à l'intérieur du logement (30).

6. Dispositif générant un rideau de lumière (10, 20) selon l'une quelconque des revendications précédentes,
- dans lequel au moins un des éléments de contact électrique (41) du capuchon terminal (11, 12) est un contact de type mâle configuré pour se mettre en prise avec un contact électrique de type femelle d'un autre capuchon terminal (11, 12) d'un autre dispositif générant un rideau de lumière (10, 20) et/ou
- dans lequel au moins un des éléments de contact électrique (40) du capuchon terminal (11, 12) est un contact de type femelle configuré pour se mettre en prise avec un contact électrique de type mâle d'un autre capuchon terminal (11, 12) d'un autre dispositif générant un rideau de lumière (10, 20) et/ou
- dans lequel au moins un des éléments de contact électrique du capuchon terminal (11, 12) est un contact de type universel configuré pour se mettre en prise avec un contact électrique de type universel d'un autre capuchon terminal (11, 12) d'un autre dispositif générant un rideau de lumière (10, 20).

7. Dispositif générant un rideau de lumière (10, 20) selon l'une quelconque des revendications précédentes,
- dans lequel ledit capuchon terminal (11) et ledit joint interne (80) sont montés au niveau de la première ouverture (31) du logement (30),
- dans lequel en plus dudit capuchon terminal (11), ci-après appelé premier capuchon terminal (11), et ledit joint interne (80), ci-après appelé premier joint interne (80), le dispositif générant un rideau de lumière (10, 20) comprend un deuxième capuchon terminal (12) et un deuxième joint interne (80),
- le deuxième capuchon terminal (12) et le deuxième joint interne (80) étant montés au niveau de la deuxième ouverture (32) du logement (30), le deuxième joint interne (80) étant monté entre le deuxième capuchon terminal (12) et le logement (30) et scellant l'interface entre le deuxième capuchon terminal (12) et le logement (30) de manière étanche à l'air pour empêcher des fluides d'entrer à l'intérieur du logement (30) au niveau de l'interface entre le deuxième capuchon terminal (12) et le logement (30),
- dans lequel le deuxième capuchon terminal (12) comprend des éléments de contact électrique (40, 41) qui ont chacun une extrémité interne, qui est connectée à un ou plusieurs composants électriques situés à l'intérieur du logement (30), et une extrémité externe, qui permet de connecter l'élément de contact électrique (40, 41) à un élément de contact électrique correspondant (40, 41) d'un autre dispositif générant un rideau de lumière (10, 20),
- les éléments de contact électrique (40, 41) s'étendant le long du deuxième capuchon terminal (12) et passant le deuxième joint d'étanchéité interne, et
- dans lequel au moins un élément de compression fournit une force de compression entre le deuxième capuchon terminal (12) et le logement (30).

8. Dispositif générant un rideau de lumière (10, 20) selon la revendication 7,
dans lequel les éléments de contact électrique (40, 41) du premier capuchon terminal (11) et les éléments de contact électrique (40, 41) du deuxième capuchon terminal (12) pouvant être connectés par paire de telle sorte que le premier capuchon terminal (11) du dispositif générant un rideau de lumière (10, 20) puisse être connecté au deuxième capuchon terminal (12) d'un autre dispositif générant un rideau de lumière (10, 20) identique.

9. Agencement d'un premier dispositif générant un rideau de lumière (10) selon l'une quelconque des revendications précédentes et d'un deuxième dispositif générant un rideau de lumière (20) selon l'une quelconque des revendications précédentes
- le premier dispositif générant un rideau de lumière (10) et le deuxième dispositif générant un rideau de lumière (20) étant alignés et leurs capuchons terminaux opposés (11, 12) et leurs éléments de contact électrique correspondants (40, 41) étant connectés l'un à l'autre,
- dans lequel le joint intermédiaire (50) est situé entre les capuchons terminaux (11, 12), et
- le joint intermédiaire (50) entourant et scellant les extrémités externes des éléments de contact électrique connectés (40, 41) de manière étanche à l'air pour empêcher des fluides d'atteindre les extrémités externes des éléments de contact électrique (40, 41).

10. Agencement selon la revendication 9
- dans lequel un premier capuchon terminal (11) du premier dispositif générant un rideau de lumière (10) fournit au moins un crochet de verrouillage (60) destiné à se mettre en prise avec un évidement de verrouillage (70) du deuxième dispositif générant un rideau de lumière (20) afin de fournir une connexion par complémentarité de forme entre les générant un rideau de lumière (10, 20), et
- dans lequel la connexion par complémentarité de forme fournit une force de compression qui presse ensemble les capuchons terminaux (11, 12) et le joint intermédiaire (50) et scelle l'interface entre les capuchons terminaux (11, 12) des dispositifs générant un rideau de lumière (10, 20) .

11. Procédé de fabrication d'un dispositif générant un rideau de lumière (10, 20) selon l'une quelconque des revendications précédentes pour générer un rideau de lumière,
**caractérisé par** les étapes consistant à
- agencer les un ou plusieurs éléments électroluminescents à l'intérieur d'un logement (30) qui comprend une première et une deuxième ouverture (31, 32) au niveau de sections d'extrémité opposées du logement (30),
- connecter des extrémités internes d'éléments de contact électrique (40, 41) d'un capuchon terminal (11, 12) à un ou plusieurs composants électriques situés à l'intérieur du logement (30),
- monter le capuchon terminal (11, 12) au niveau de l'une des ouvertures (31, 32) du logement (30) et un joint entre celles-ci, et
- fournir une force de compression entre le capuchon terminal (11, 15 12) et le logement (30) et sceller l'interface entre le capuchon terminal (11, 12) et le logement (30).
